# EUROPEAN PATENT APPLICATION

(11) **EP 4 535 735 A1**
(43) Date of publication of application: **09.04.2025**
(21) Application number: 23811541.4
(22) Date of filing: 25.04.2023
(51) Int. Cl.: H04L 25/03, H02J 7/10

(54) **IDENTIFICATION INFORMATION RECEIVING DEVICE, ELECTRICITY STORAGE PACK, IDENTIFICATION INFORMATION RECEIVING METHOD, IDENTIFICATION INFORMATION RECEIVING PROGRAM, AND RECORDING MEDIUM STORING PROGRAM**

(30) Priority: 27.05.2022 JP 2022086860
(71) Applicant: Panasonic Intellectual Property Management Co., Ltd., Kadoma-shi, Osaka 571-0057 (JP)
(72) Inventor: KURANUKI Masaaki, Kadoma-shi, Osaka 571-0057 (JP); HAMAMOTO Katsuaki, Kadoma-shi, Osaka 571-0057 (JP)
(74) Representative: Novagraaf International SA
(86) International application number: PCT/JP2023/016234
(87) International publication number: WO 2023/228663

(57) **Abstract**

In an identification information receiving device that receives identification information defined by a plurality of bits and superimposed on a current or a voltage of a power line by an identification information transmitting device that is connected to the identification information receiving device via the power line, an integration circuit integrates an input signal that indicates a voltage value corresponding to the current or the voltage of the power line. A subtraction circuit subtracts an output signal of the integration circuit from the input signal. A binary converter determines "1" when an output signal of the subtraction circuit is greater than or equal to a threshold value, and determines "0" when the output signal of the subtraction circuit is less than the threshold value.

## Description

### TECHNICAL FIELD

The present disclosure relates to an identification information receiving device, an electricity storage pack, an identification information receiving method, and an identification information receiving program for receiving identification information superimposed on current or voltage of a power line.

### BACKGROUND ART

In recent years, electrically assisted bicycles have become increasingly popular. Removable and portable battery packs are used in electrically assisted bicycles. In order to eliminate terminals for communication lines from battery pack connectors, a system has been developed to transmit control signals wirelessly by including a wireless communication function in the battery packs and the electrically assisted bicycles.

When a plurality of electrically assisted bicycles are present within the range where wireless communication can be established with the battery pack of a vehicle, the battery pack may be erroneously controlled by another vehicle that is adjacent to the vehicle, and the safety and security of the entire system cannot be guaranteed. In particular, in rental services and sharing services, a plurality of electrically assisted bicycles are often parked in a single bicycle parking lot. In order to operate the entire system safely and securely, each electrically assisted bicycle needs to correctly identify the mounted battery pack.

Identification information could be superimposed on a power line with binary current (other than zero) or binary voltage (other than zero) while supplying power from the battery pack to the vehicle via the power line. The receiver compares the measured value of current or voltage with a threshold value, sets the measured value greater than or equal to the threshold value to 1 and sets the measured value less than the threshold value to 0, and receives the identification information.

However, variations in component characteristics and changes in current consumption may add offsets to the measured values of current or voltage, which may prevent the identification information from being received correctly. Factors that cause variations in the current or the voltage superimposed on the power line include both long-term and short-term factors. The long-term factors include individual differences in electronic components and aging. The long-term factors almost entirely depend on variations in the DC component. The short-term factors include unexpected variations in load current, such as intermittent operation of a microcontroller. The short-term factors are caused by variations in the AC component, and correspond to current or voltage variations in a single packet.

Patent Literature (PTL) 1 discloses a method for switching a current threshold by switching a load resistor using a switch according to the intensity of the communication current.

### Citation List

### Patent Literature

[PTL 1] International Publication No. WO18/173173

### SUMMARY OF THE INVENTION

In the method disclosed in PTL 1, the number of switchable current thresholds depends on the number of load resistors and switches. Hence, in order to increase the number of switchable current thresholds, the circuit scale needs to be increased. The current threshold is switched between fixed values. In addition, it is difficult to address the short-term variation factors.

The present disclosure has been conceived in view of these circumstances. An object of the present disclosure is to provide a technique for reducing incorrect determinations in detecting identification information superimposed on current or voltage of the power line.

In order to solve the above problems, an identification information receiving device according to an aspect of the present disclosure is an identification information receiving device that receives identification information defined by a plurality of bits. The identification information is superimposed on a current or a voltage of a power line by an identification information transmitting device that is connected to the identification information receiving device via the power line. The identification information receiving device includes: an integration circuit that integrates an input signal that indicates a voltage value corresponding to the current or the voltage of the power line; a subtraction circuit that subtracts an output signal of the integration circuit from the input signal; and a binary converter that determines "1" when an output signal of the subtraction circuit is greater than or equal to a threshold value, and determines "0" when the output signal of the subtraction circuit is less than the threshold value.

Note that an arbitrary combination of the structural elements described above and those obtained by converting the expressions described in the present disclosure into devices, systems, methods, computer programs, recording media, and the like are also effective as embodiments of the present disclosure.

According to the present disclosure, it is possible to reduce incorrect determinations in detecting identification information superimposed on the current or the voltage of the power line.

### BRIEF DESCRIPTION OF THE DRAWINGS

[FIG. 1] FIG. 1 illustrates an electrically assisted bicycle on which a battery pack according to an embodiment is mounted.
[FIG. 2] FIG. 2 is a diagram for describing an outline of Authentication Processing Example 1 of the battery pack mounted on a vehicle.
[FIG. 3] FIG. 3 illustrates Configuration Example 1 of the battery pack and the vehicle according to the embodiment.
[FIG. 4] FIG. 4 is a diagram for describing an outline of Authentication Processing Example 2 of the battery pack mounted on the vehicle.
[FIG. 5] FIG. 5 illustrates Configuration Example 2 of the battery pack and the vehicle according to the embodiment.
[FIG. 6A] FIG. 6A illustrates an example of transmission current and reception current superimposed on a power line.
[FIG. 6B] FIG. 6B illustrates an example of transmission current and reception current superimposed on a power line.
[FIG. 7] FIG. 7 illustrates a configuration example of a first ID detection circuit.
[FIG. 8A] FIG. 8A illustrates a simulation waveform of a result of Simulation 1.
[FIG. 8B] FIG. 8B illustrates a simulation waveform of a result of Simulation 1.
[FIG. 8C] FIG. 8C illustrates a simulation waveform of a result of Simulation 1.
[FIG. 8D] FIG. 8D illustrates a simulation waveform of a result of Simulation 1.
[FIG. 9] FIG. 9 illustrates the waveform of an input signal (V1) to the first ID detection circuit in FIG. 8A, the waveform of an output signal (V2) of an integration circuit in FIG. 8B, and the waveform of an output signal (V3) of a subtraction circuit in FIG. 8C in an overlapping manner.
[FIG. 10] FIG. 10 illustrates the waveform of the input signal (V1) to the first ID detection circuit in FIG. 8A and the waveform of an output signal (V4) of a comparison circuit in FIG. 8D in an overlapping manner.
[FIG. 11A] FIG. 11A illustrates a simulation waveform of a result of Simulation 1.
[FIG. 11B] FIG. 11B illustrates a simulation waveform of a result of Simulation 1.
[FIG. 11C] FIG. 11C illustrates a simulation waveform of a result of Simulation 1.
[FIG. 11D] FIG. 11D illustrates a simulation waveform of a result of Simulation 1.
[FIG. 12] FIG. 12 illustrates the waveform of an input signal (V1) to the first ID detection circuit in FIG. 11A, the waveform of an output signal (V2) of the integration circuit in FIG. 11B, and the waveform of an output signal (V3) of the subtraction circuit in FIG. 11C in an overlapping manner.
[FIG. 13] FIG. 13 illustrates the waveform of the input signal (V1) to the first ID detection circuit in FIG. 11A and the waveform of an output signal (V4) of the comparison circuit in FIG. 11D in an overlapping manner.

### DESCRIPTION OF EMBODIMENT

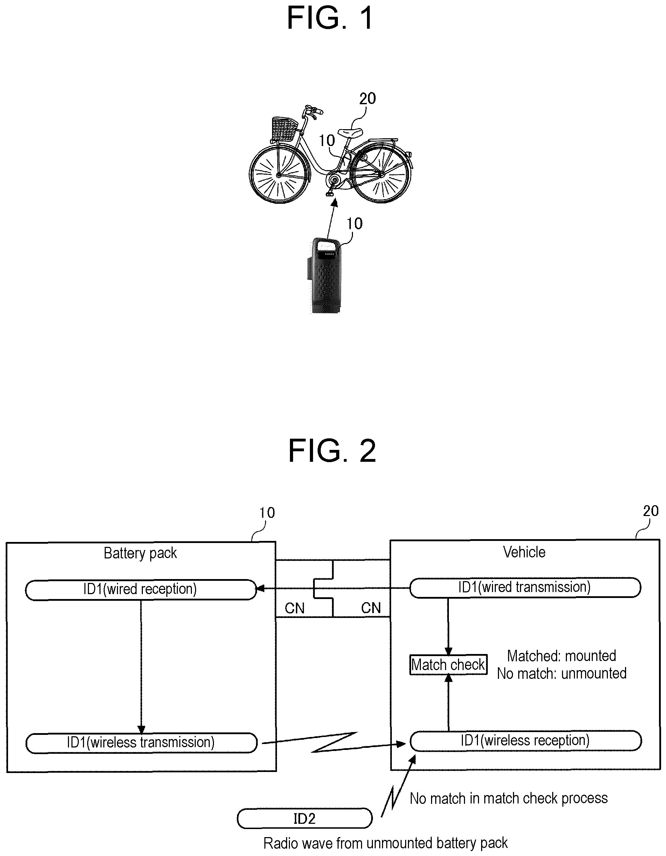

FIG. 1 illustrates an electrically assisted bicycle on which a battery pack according to an embodiment is mounted. Battery pack 10 is removable, portable, and replaceable, and can be mounted on the mounting slot of vehicle 20 or a charger (not illustrated). Hereinafter, in the present embodiment, an electrically assisted bicycle is assumed as vehicle 20.

Since replaceable battery pack 10 is frequently connected to and disconnected from the mounting slot of vehicle 20 or the charger, the connector portion of battery pack 10 is prone to progressive deterioration. In view of the above, in the present embodiment, battery pack 10 includes a wireless communication function to transmit control signals via wireless communication. This allows the terminal for the communication line to be eliminated from the connector of battery pack 10, leaving only the terminal for the power line.

Near field wireless communication is used for wireless communication between vehicle 20 and battery pack 10. Bluetooth (registered trademark), Wi-Fi (registered trademark), infrared communication, and the like can be used for the near field wireless communication. Hereinafter, it is assumed that Bluetooth Low Energy (BLE) is used as the near field wireless communication in the present embodiment.

The BLE is one of the extended standards of Bluetooth, and a low power consumption near field wireless communication standard using the 2.4 GHz band. The BLE is suitable for battery operation because the BLE consumes low power to such an extent that the battery pack can be driven for several years with a single button cell, thus, minimizing the impact on the remaining capacity of battery pack 10. In addition, many BLE communication modules have been shipped to the market, and therefore are available at low cost.

A radio wave coverage of the BLE is approximately 10 meters when a typical Class 2 device is used. Therefore, a state in which a plurality of vehicles 20 and a plurality of battery packs 10 are present within one communication range of BLE may occur. In such a case, radio wave interference may occur between vehicle systems, resulting in an unstable operation. Furthermore, vehicle 20 may be misconnect to another battery pack 10 that is other than battery pack 10 mounted on the vehicle. In such a case, the mounted battery pack 10 may be controlled incorrectly.

Therefore, a mechanism is required to ensure that battery pack 10 mounted on vehicle 20 and battery pack 10 of a communication partner of vehicle 20 are identical. In the present embodiment, identification information (ID) is used to check that battery pack 10 physically connected to vehicle 20 by wire and battery pack 10 connected by wireless communication are identical to each other. The identification information (ID) may be unique to each vehicle 20 or each battery pack 10, or may be temporal identification information. For example, a Bluetooth Device (BD) address or Medium Access Control (MAC) address may be used as unique identification information.

FIG. 2 is a diagram for describing an outline of Authentication Processing Example 1 of battery pack 10 mounted on vehicle 20. When the connector of battery pack 10 is connected to the connector of the mounting slot of vehicle 20, vehicle 20 transmits ID1 to battery pack 10 via wired communication. When battery pack 10 receives ID1 via wired communication, battery pack 10 transmits an advertisement packet (beacon packet) that includes received ID1 and battery pack ID of battery pack 10 via near field wireless communication. The advertisement packet is a signal for notifying nearby devices of the presence of battery pack 10 via near field wireless communication.

When receiving the advertisement packet, vehicle 20 checks ID1 included in the advertisement packet against ID1 transmitted to battery pack 10 via wired communication. When there is a match between these, vehicle 20 authenticates that the mounted battery pack 10 and the communication partner of vehicle 20 via near field wireless communication are identical. When there is no match between these, vehicle 20 determines that the mounted battery pack 10 and the communication partner of vehicle 20 via near field wireless communication are not identical, and does not authenticate battery pack 10 of the communication partner. For example, when vehicle 20 receives an advertisement packet that includes ID2, ID2 does not match ID1 transmitted to battery pack 10 via wired communication. Therefore, vehicle 20 does not authenticate battery pack 10 from which the advertisement packet that includes ID2 has been transmitted.

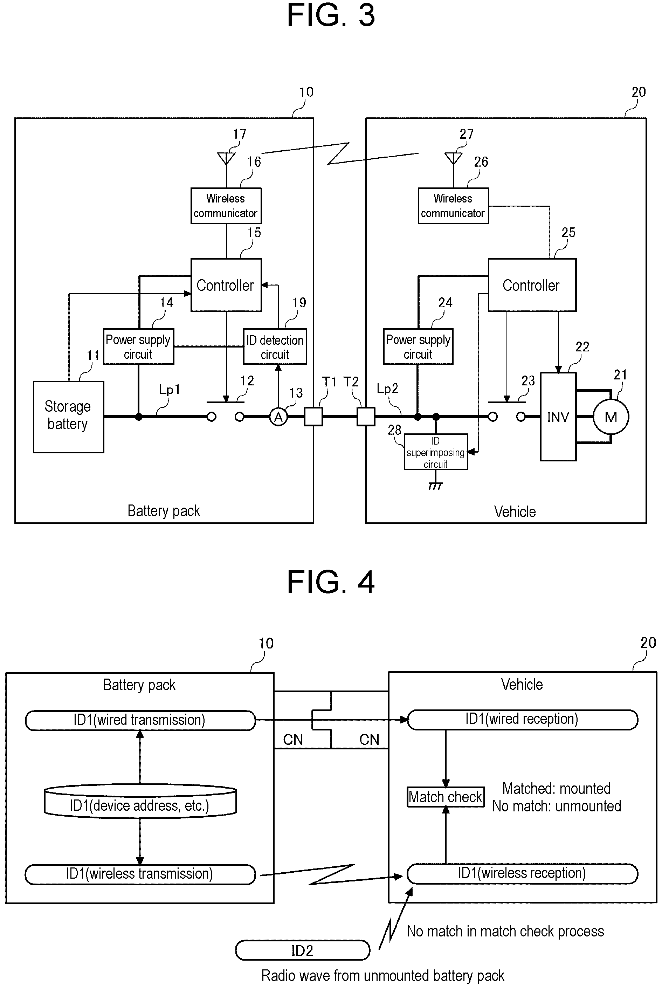

FIG. 3 illustrates Configuration Example 1 of battery pack 10 and vehicle 20 according to the embodiment. Configuration Example 1 illustrated in FIG. 3 corresponds to Authentication Processing Example 1. FIG. 3 illustrates the structural elements necessary for Authentication Processing Example 1, and the structural elements not related to Authentication Processing Example 1 are omitted as appropriate. FIG. 3 presumes a state in which battery pack 10 is mounted on vehicle 20.

Battery pack 10 includes storage battery 11, first relay 12, first current sensor 13, first power supply circuit 14, first controller 15, first wireless communicator 16, first antenna 17, first ID detection circuit 19, and power supply terminal T1. Vehicle 20 includes motor 21, inverter 22, second relay 23, second power supply circuit 24, second controller 25, second wireless communicator 26, second antenna 27, second ID superimposing circuit 28, and power receiving terminal T2. In a state where battery pack 10 is mounted on vehicle 20, power supply terminal T1 and power receiving terminal T2 are in physical contact with each other, and power line Lp1 in battery pack 10 and power line Lp2 in vehicle 20 are conducted to each other.

Storage battery 11 includes a plurality of cells connected in series or in series-parallel. Examples of the cells include lithium-ion battery cells, nickel-metal hydride battery cells, and lead-acid battery cells. Hereinafter, in the description, an example is assumed in which lithium-ion battery cells (nominal voltage: 3.6 V to 3.7 V) are used. The number of cells connected in series is determined according to the drive voltage of motor 21 of vehicle 20.

First relay 12 is disposed in power line Lp1 that connects storage battery 11 and power supply terminal T1. Instead of the relay, another type of switch, such as a semiconductor switch, may be used.

First current sensor 13 measures the current flowing in power line Lp1 in battery pack 10, and outputs the measured current to first ID detection circuit 19. First current sensor 13 includes, for example, a combination of a shunt resistor and an amplifier. The voltage across the shunt resistor disposed in power line Lp1 is amplified by the amplifier, so that first current sensor 13 outputs a voltage value corresponding to the current flowing in power line Lp1. A hall element or a CT sensor can be used instead of the shunt resistor.

First power supply circuit 14 is a DC/DC converter that steps down the voltage of storage battery 11 to generate supply voltage of first controller 15 (e.g., approximately 3.3 V to 5 V) and supply voltage of first ID detection circuit 19 (5 V in the specific example below). First power supply circuit 14 may include a switching regulator or a linear regulator.

First controller 15 is a microcontroller that controls the entire battery pack 10. First controller 15 monitors the state of storage battery 11 (specifically, the voltage, current, and temperature of each cell in storage battery 11). Based on the monitored data, first controller 15 estimates the state of charge (SOC), full charge capacity (FCC), and state of health (SOH) of each cell in storage battery 11. First controller 15 turns off first relay 12 to protect the cells in storage battery 11 when an overvoltage, undervoltage, overcurrent, high temperature anomaly or low temperature anomaly occurs in the cells.

First wireless communicator 16 executes near field wireless communication processing. In the present embodiment, first wireless communicator 16 includes a BLE module, and first antenna 17 includes a chip antenna or pattern antenna built into the BLE module. First wireless communicator 16 outputs data received via near field wireless communication to first controller 15, and transmits data input from first controller 15 via near field wireless communication.

In the present embodiment, vehicle 20 includes a three-phase AC motor as motor 21 for driving. Inverter 22 converts DC power supplied from battery pack 10 to AC power, and supplies the AC power to motor 21 during power operation. During regeneration operation, inverter 22 converts the AC power supplied from motor 21 to DC power, and supplies the DC power to battery pack 10. Motor 21 rotates according to the AC power supplied from inverter 22 during power operation. During regeneration operation, motor 21 converts the rotational energy from deceleration to AC power, and supplies the AC power to inverter 22.

Second relay 23 is disposed in power line Lp2 that connects inverter 22 and power receiving terminal T2. Instead of the relay, another type of switch, such as a semiconductor switch, may be used.

Second power supply circuit 24 is a DC/DC converter that steps down the voltage supplied from storage battery 11 in battery pack 10 mounted on vehicle 20 to generate supply voltage (e.g., approximately 3.3 V to 5 V) of second controller 25. Second power supply circuit 24 may include a switching regulator or a linear regulator. In the present embodiment, vehicle 20 does not include batteries (e.g., lead-acid batteries) for generating control power supply. Therefore, it is necessary to generate the control power supply from the driving power supply supplied from storage battery 11 in the mounted battery pack 10.

Second controller 25 is a microcontroller that controls the entire vehicle 20. Second wireless communicator 26 executes near field wireless communication processing. In the present embodiment, second wireless communicator 26 includes a BLE module, and second antenna 27 includes a chip antenna or pattern antenna built into the BLE module. Second wireless communicator 26 outputs the data received via near field wireless communication to second controller 25, and transmits the data input from second controller 25 via near field wireless communication.

Second ID superimposing circuit 28 superimposes ID on the current flowing in power line Lp2. The ID is defined by a plurality of bits, each bit being represented by a binary current. When second controller 25 receives its power supply from storage battery 11 of battery pack 10, rather than from its own battery included in vehicle 20, it is not possible to assign the energization and de-energization of the current flowing from storage battery 11 to vehicle 20 to a binary current representing each bit of the ID. Therefore, the binary current representing each bit needs to be set to two different current values other than zero.

Second ID superimposing circuit 28 includes two loads with different resistance values, and one or more switches for selecting one of the two loads or for setting the two loads to non-conducting states. Second ID superimposing circuit 28 may also include a variable load that can be switched between two different resistance values, and one or more switches for switching the resistance value of the variable load or setting the variable load to a non-conducting state.

When second relay 23 is in an off state, the current flowing in power line Lp2 depends almost on the current consumed by second controller 25. When second relay 23 is off, second controller 25 sets ID to second ID superimposing circuit 28. Second ID superimposing circuit 28 superimposes the bit "1" of the ID on the current by setting the load with a smaller resistance value of two loads to a conducting state, and superimposes the bit "0" of the ID on the current by setting the load with a larger resistance value to a conducting state. This causes the value of the current drawn to vehicle 20 side to vary according to each bit of the ID.

First controller 15 or second controller 25, for example, includes a microcomputer that mainly includes a central processing unit (CPU) and memory. In other words, first controller 15 or second controller 25 is realized by a computer that includes a CPU and memory, and the computer functions as first controller 15 or second controller 25 when the CPU executes the program stored in the memory. The program is recorded in the memory of first controller 15 or second controller 25 in advance here, but may also be provided through telecommunication lines such as the Internet or on a (non-transitory) recording medium such as a memory card.

First current sensor 13 of battery pack 10 measures the current flowing in power line Lp1, and outputs the measured current to first ID detection circuit 19. First ID detection circuit 19 detects the ID superimposed on the current flowing in power line Lp1 based on the voltage value corresponding to the current measured by first current sensor 13, and outputs the detected ID to first controller 15. An example of a specific configuration of first ID detection circuit 19 will be described later.

FIG. 4 is a diagram for describing an outline of Authentication Processing Example 2 of battery pack 10 mounted on vehicle 20. When the connector of battery pack 10 is connected to the connector of the mounting slot of vehicle 20, battery pack 10 transmits ID1 to vehicle 20 via wired communication. At the same time, battery pack 10 transmits an advertisement packet that includes ID1 via near field wireless communication.

When vehicle 20 receives the advertisement packet, vehicle 20 checks ID1 included in the advertisement packet against ID1 received via wired communication. When there is a match between these, vehicle 20 authenticates that the mounted battery pack 10 and the communication partner of vehicle 20 via the near field wireless communication are identical. When there is no match between these, vehicle 20 determines that the mounted battery pack 10 and the communication partner of vehicle 20 via the near field wireless communication are not identical, and does not authenticate battery pack 10 of the communication partner. For example, when vehicle 20 receives an advertisement packet that includes ID2, ID2 does not match ID1 received via wired communication. Therefore, vehicle 20 does not authenticate battery pack 10 from which the advertisement packet that includes ID2 has been transmitted.

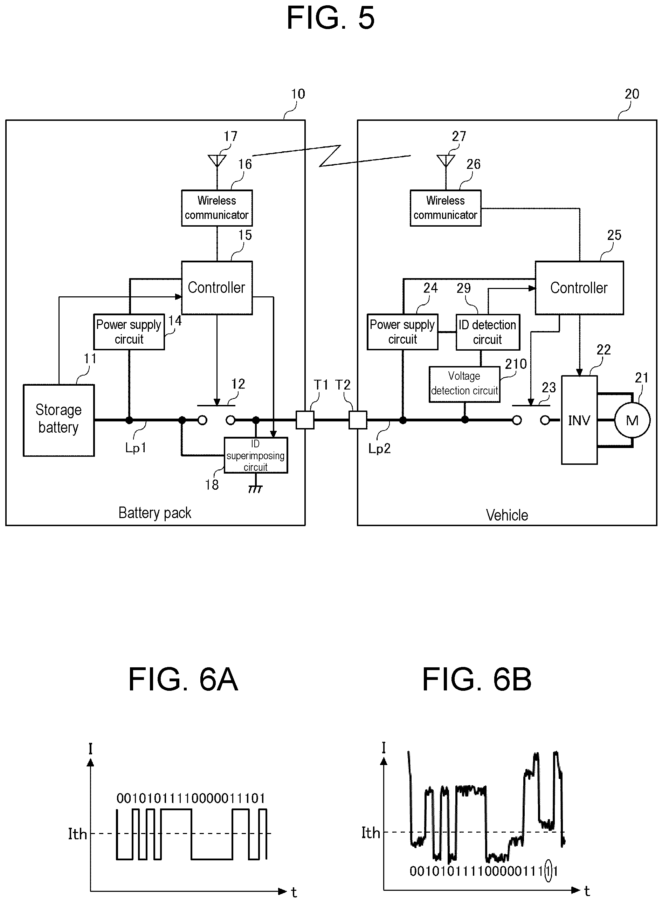

FIG. 5 illustrates Configuration Example 2 of battery pack 10 and vehicle 20 according to the embodiment. Configuration Example 2 illustrated in FIG. 5 corresponds to Authentication Processing Example 2. FIG. 5 illustrates the structural elements necessary for Authentication Processing Example 2, and the structural elements not related to Authentication Processing Example 2 are omitted as appropriate. In Configuration Example 1, ID is superimposed on the current flowing in the power line. In Configuration Example 2, ID is superimposed on the voltage of the power line.

In Configuration Example 2 illustrated in FIG. 5, compared to Configuration Example 1 illustrated in FIG. 3, first ID superimposing circuit 18 is included in battery pack 10, and second ID detection circuit 29 and voltage detection circuit 210 are included in vehicle 20. First ID superimposing circuit 18 includes, for example, an addition circuit that includes an operational amplifier. The operational amplifier uses the voltage of storage battery 11 as supply voltage, adds the ID voltage supplied from first controller 15 to the base voltage that is lower than the supply voltage, and outputs the voltage after addition to power line Lp1. This causes the value of the voltage supplied to vehicle 20 to vary according to each bit of the ID.

Voltage detection circuit 210 in vehicle 20 measures the voltage of power line Lp2, and outputs the measured voltage to second ID detection circuit 29. Voltage detection circuit 210 includes, for example, a resistor voltage divider circuit, and the divided voltage is input to second ID detection circuit 29. Second ID detection circuit 29 detects the ID superimposed on the voltage flowing in power line Lp2 based on the voltage value measured by voltage detection circuit 210, and outputs the detected ID to second controller 25.

In Configuration Example 1 illustrated in FIG. 3, ID is transmitted from vehicle 20 to battery pack 10, so that vehicle 20 serves as an identification information transmitting device and battery pack 10 serves as an identification information receiving device. In contrast, in Configuration Example 2 illustrated in FIG. 5, ID is transmitted from battery pack 10 to vehicle 20, so that battery pack 10 serves as an identification information transmitting device and vehicle 20 serves as an identification information receiving device. A description of an identification information receiving device will be given below based on Configuration Example 1 that employs the current superimposing method.

FIG. 6A and FIG. 6B each illustrate an example of transmission current and reception current superimposed on the power line. FIG. 6A illustrates an example of transmission current superimposed by the identification information transmitting device, and FIG. 6B illustrates an example of reception current detected by the identification information receiving device. The identification information receiving device determines bit "1" when current value I is greater than or equal to threshold value Ith, and determines bit "0" when current value I is less than threshold value Ith. As an example, threshold value Ith may be set to 50mA, an assumed value of the low-level side of current value I may be set to 30 mA, and an assumed value of the high-level side of current value I may be set to 70 mA.

In this case, an offset may be added to current value I due to variations in component characteristics and changes in current consumption. Variations in component characteristics are caused by at least one of individual differences, temperature changes, and aging. Unexpected changes in current consumption of the identification information transmitting device (vehicle 20) occur, for example, when some kind of background processing or event processing (e.g., software update processing) is initiated in second controller 25 (microcontroller) during the authentication processing using second controller 25. Changes in current consumption of the identification information transmitting device (vehicle 20) can also be caused by changes in the configuration of the identification information transmitting device (vehicle 20), such as the illumination of light.

When the current consumption of the identification information transmitting device increases due to such changes in system conditions or system configuration, the current flowing in the power line increases. That is, an offset is added to the current flowing in the power line. The offset can cause errors in bit determination of the ID superimposed on the current flowing in the power line. In the examples illustrated in FIG. 6A and FIG. 6B, the ID superimposed on the current by the identification information transmitting device is "00101011110000011101", while the ID detected from the current by the identification information receiving device is "00101011110000011111". In such a manner, a bit error has occurred in the second least significant bit of the detected ID. The following describes a method for achieving stable communication by canceling the effects of the offset superimposed on the current and preventing ID bit determination errors.

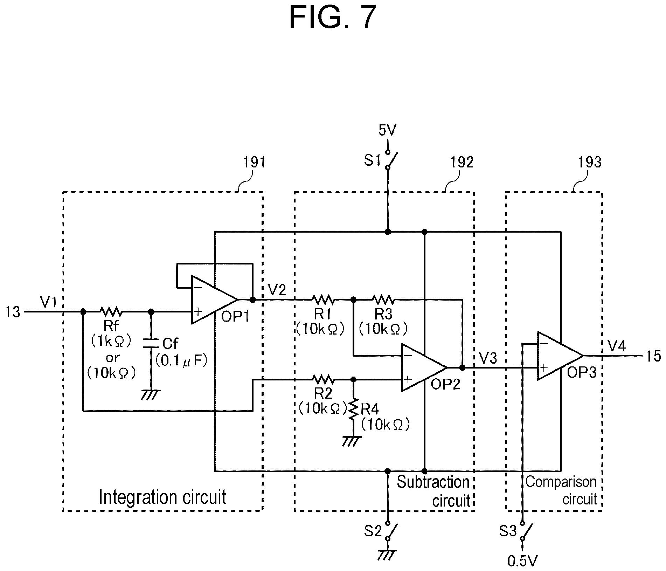

FIG. 7 illustrates a configuration example of first ID detection circuit 19. First ID detection circuit 19 includes integration circuit 191, subtraction circuit 192, and comparison circuit 193. Integration circuit 191 integrates an input signal (V1) which indicates a voltage value corresponding to the current flowing in the power line. Integration circuit 191 forms a low-pass filter. Subtraction circuit 192 subtracts an output signal (V2) of integration circuit 191 from the input signal (V1).

Comparison circuit 193 compares an output signal (V3) of subtraction circuit 192 with a threshold value. When the output signal (V3) of subtraction circuit 192 is greater than or equal to the threshold value, comparison circuit 193 outputs a high-level signal to first controller 15. When the output signal (V3) of subtraction circuit 192 is less than the threshold value, comparison circuit 193 outputs a low-level signal to first controller 15. First controller 15 identifies the ID superimposed on the current flowing in the power line by determining "1" when a high-level signal is input from first ID detection circuit 19 and "0" when a low-level signal is input from first ID detection circuit 19.

In the example illustrated in FIG. 7, integration circuit 191 includes a RC circuit and a voltage follower. In the RC circuit, filter resistor Rf and filter capacitor Cf are connected in series between the input terminal and the ground terminal, and the connection point between filter resistor Rf and filter capacitor Cf serves as an output terminal.

The RC circuit outputs a signal whose components higher than or equal to the cutoff frequency have been attenuated.

The voltage follower includes first operational amplifier OP1. The output terminal of the RC circuit is connected to the non-inverting input terminal of first operational amplifier OP1, and the output terminal of first operational amplifier OP1 is connected to the inverting input terminal of first operational amplifier OP1. The voltage follower is a buffer that can be considered to have an amplification factor = 1, input impedance = ∞, and output impedance = 0. By disposing the voltage follower between the RC circuit and subtraction circuit 192, it is possible to reduce variations in the time constant of the RC circuit due to the effects of first resistor R1 and third resistor R3 included in subtraction circuit 192.

Although FIG. 7 illustrates an example in which integration circuit 191 includes a combination of a passive filter (RC low-pass filter) and a voltage follower, integration circuit 191 may include an active filter (integration circuit that includes an operational amplifier). In an integration circuit that includes an operational amplifier, a capacitor is connected to the feedback path of the operational amplifier.

Subtraction circuit 192 includes second operational amplifier OP2, first resistor R1, second resistor R2, third resistor R3, and fourth resistor R4. First resistor R1 is connected between the inverting input terminal of second operational amplifier OP2 and the output terminal of first operational amplifier OP1 included in integration circuit 191. Second resistor R2 is connected between the non-inverting input terminal of second operational amplifier OP2 and the input terminal of first ID detection circuit 19 (input terminal of integration circuit 191). Third resistor R3 is connected to the feedback path between the output terminal and the inverting input terminal of second operational amplifier OP2. Fourth resistor R4 is connected between the ground and the connection point between second resistor R2 and the non-inverting input terminal.

The resistance values of first resistor R1, second resistor R2, third resistor R3 and fourth resistor R4 are set to the same value (10 kΩ in the example illustrated in FIG. 7). When the resistance values of first resistor R1, second resistor R2, third resistor R3, and fourth resistor R4 are the same, the output signal (V3) of second operational amplifier OP2 is the signal obtained by subtracting the signal (V2) input to the inverting input terminal from the signal (V1) input to the non-inverting input terminal.

Comparison circuit 193 includes third operational amplifier OP3 that serves as a comparator. The non-inverting input terminal of third operational amplifier OP3 is connected to the output terminal of second operational amplifier OP2 of subtraction circuit 192. The threshold voltage (0.5 V in the example illustrated in FIG. 7) is input to the inverting input terminal of third operational amplifier OP3 as a reference voltage. Third operational amplifier OP3 outputs a high-level signal (5 V in the example illustrated in FIG. 7) when the output signal (V3) of subtraction circuit 192 is greater than or equal to the threshold voltage, and outputs a low-level signal (0 V in the example illustrated in FIG. 7) when the output signal (V3) of subtraction circuit 192 is less than the threshold voltage.

In the example illustrated in FIG. 7, a single power supply operational amplifier is used for each of first operational amplifier OP1, second operational amplifier OP2, and third operational amplifier OP3. Specifically, a 5 V single power supply operational amplifier is used. The single power supply operational amplifier does not generate negative amplitudes, unlike a dual power supply operational amplifier (e.g., +15 V and -15 V dual power supply operational amplifier). First operational amplifier OP1 clamps the lower limit of the input signal (V1) corresponding to the current measured by first current sensor 13 to around 0V. Negative amplitudes are difficult to handle for first controller 15 (microcontroller) that handles digital data. By setting the lower limit of the input signal (V1) to 0 V, data that is easy to handle by first controller 15 (microcontroller) can be generated. In addition, by setting the operating ranges of first operational amplifier OP1, second operational amplifier OP2, and third operational amplifier OP3 to 0 V to 5 V, power consumption can be reduced compared to the case where the operating ranges are set to -15 V to +15 V.

First switch S1 is connected between the 5V power supply and the positive power supply terminals of first operational amplifier OP1, second operational amplifier OP2 and third operational amplifier OP3. Second switch S2 is connected between the ground and the negative power supply terminals of first operational amplifier OP1, second operational amplifier OP2 and third operational amplifier OP3. Third switch S3 is connected between the 0.5 V power supply and the inverting input terminal of third operational amplifier OP3. The 5 V power supply and the 0.5 V power supply are generated based on the voltage supplied from first power supply circuit 14. The voltage supplied from first power supply circuit 14 is used as it is or is used after being stepped down.

When an authentication period (e.g., 10 seconds after battery pack 10 is mounted) that includes the reception of the ID at the time of mounting of battery pack 10 ends, first controller 15 blocks the power supply to the active elements (first operational amplifier OP1, second operational amplifier OP2, and third operational amplifier OP3 in the example illustrated in FIG. 7) included in integration circuit 191, subtraction circuit 192, and comparison circuit 193, by turning off first switch S1, second switch S2, and third switch S3. This eliminates power consumption during periods when first ID detection circuit 19 is not used, saving the capacity of storage battery 11.

The results of the simulations of first ID detection circuit 19 illustrated in FIG. 7 will be descried below. In Simulation 1, filter resistor Rf of 1 kΩ and filter capacitor Cf of 0.1 µF are used. In this case, the time constant of the RC circuit is set to τ = 0.1 ms and the cutoff frequency of the RC circuit is set to fc ≒ 1592 Hz. In Simulation 2, filter resistor Rf of 10 kΩ and filter capacitor Cf of 0.1 µF are used. In this case, the time constant of the RC circuit is set to τ = 1 ms and the cutoff frequency of the RC circuit is set to fc ≒ 159.2 Hz.

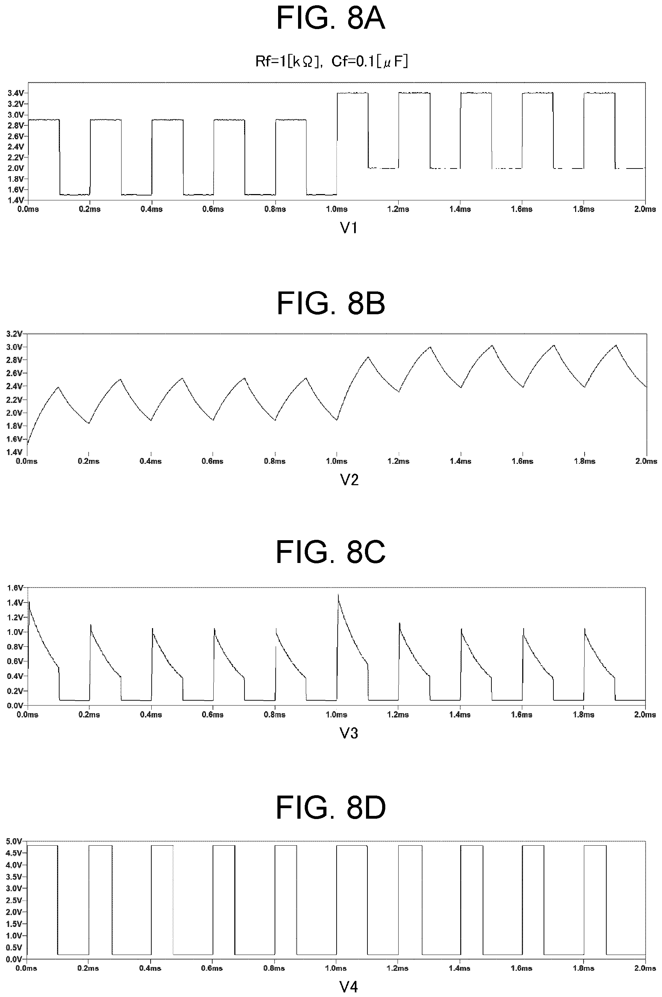

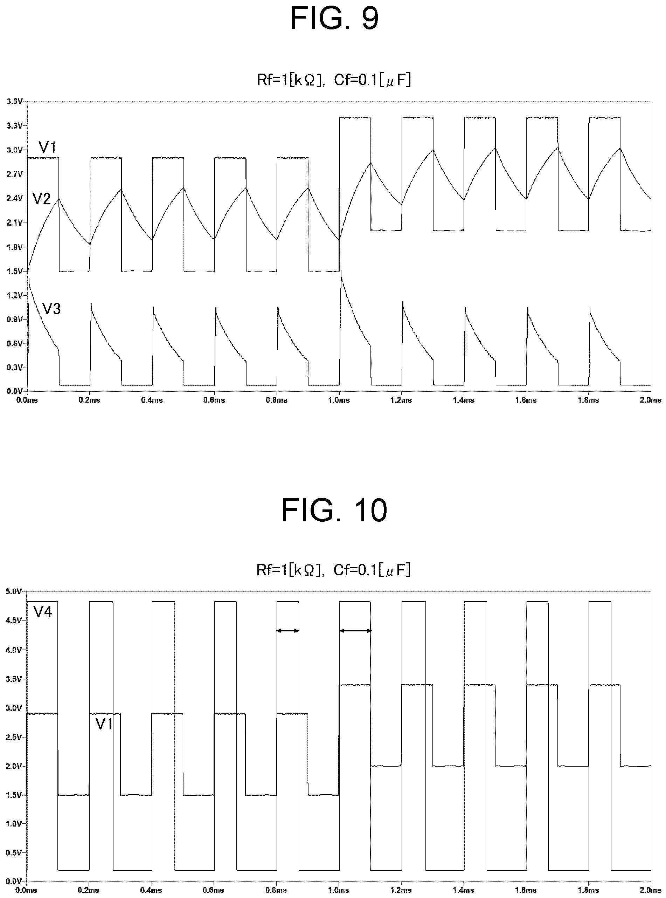

FIG. 8A to FIG. 8D illustrate the simulation waveforms of the results of Simulation 1. FIG. 8A illustrates the waveform of the input signal (V1) to first ID detection circuit 19, FIG. 8B illustrates the waveform of the output signal (V2) of integration circuit 191, FIG. 8C illustrates the waveform of the output signal (V3) of subtraction circuit 192, and FIG. 8D illustrates the waveform of the output signal (V4) of comparison circuit 193. FIG. 9 illustrates the waveform of the input signal (V1) to first ID detection circuit 19 in FIG. 8A, the waveform of the output signal (V2) of integration circuit 191 in FIG. 8B, and the waveform of the output signal (V3) of subtraction circuit 192 in FIG. 8C in an overlapping manner. FIG. 10 illustrates the waveform of the input signal (V1) to first ID detection circuit 19 in FIG. 8A and the waveform of the output signal (V4) of comparison circuit 193 in FIG. 8D in an overlapping manner.

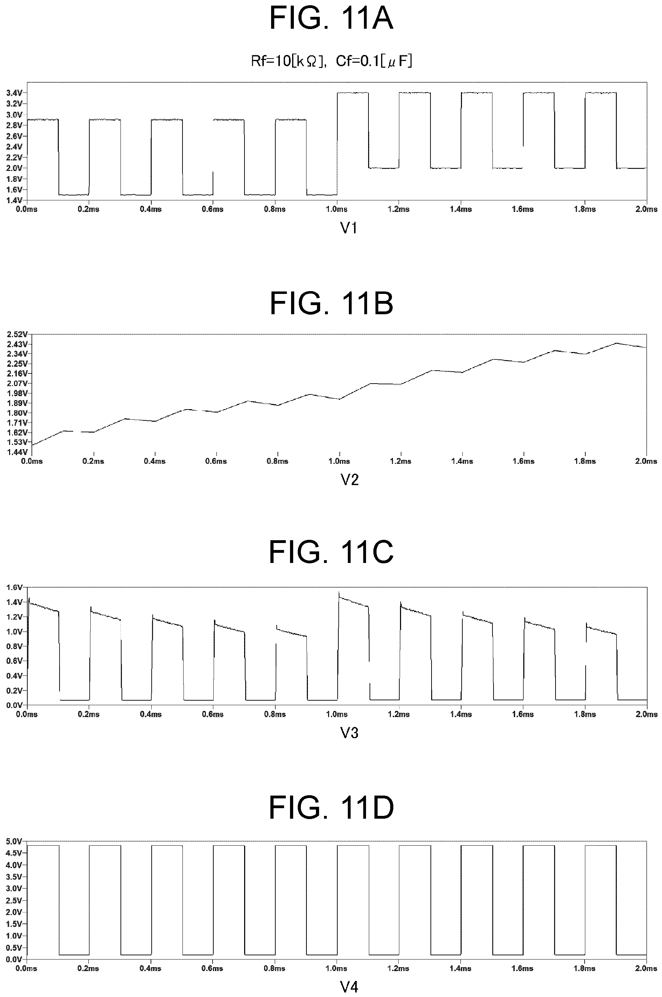

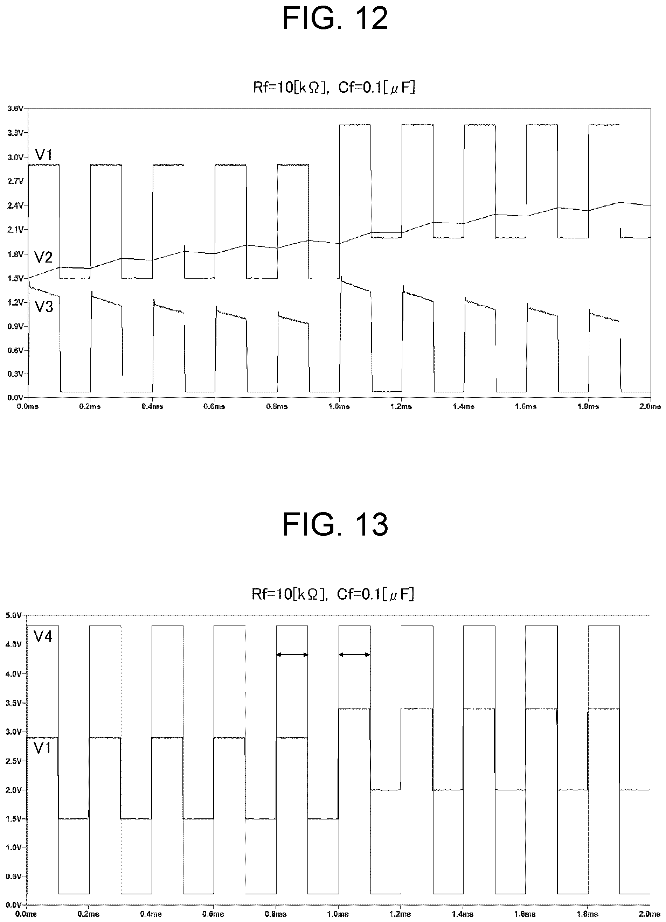

FIG. 11A to FIG. 11D(d) illustrate the simulation waveforms of the results of Simulation 2. FIG. 11A illustrates the waveform of the input signal (V1) to first ID detection circuit 19, FIG. 11B illustrates the waveform of the output signal (V2) of integration circuit 191, FIG. 11C illustrates the waveform of the output signal (V3) of subtraction circuit 192, and FIG. 11D illustrates the waveform of the output signal (V4) of comparison circuit 193. FIG. 12 illustrates the waveform of the input signal (V1) to first ID detection circuit 19 in FIG. 11A, the waveform of the output signal (V2) of integration circuit 191 in FIG. 11B, and the waveform of the output signal (V3) of subtraction circuit 192 in FIG. 11C in an overlapping manner. FIG. 13 illustrates the waveform of the input signal (V1) to first ID detection circuit 19 in FIG. 11A and the waveform of the output signal (V4) of comparison circuit 193 in FIG. 11D in an overlapping manner.

In the present embodiment, 9600 bps is assumed as the ID communication speed. In Simulation 1, the input signal (V1) is a square wave with a clock frequency of 5 kHz (period of 0.2 ms) that is at or close to the clock frequency at which 9600 bits are transferred per second.

The output signal (V2) of integration circuit 191 follows the input signal (V1), and converges around the center of the amplitude of the input signal (V1). Since the time constant in Simulation 2 is larger than the time constant in Simulation 1, the output signal (V2) of integration circuit 191 in Simulation 2 has a smoother variation.

Simulation 1 and Simulation 2 each show an example in which an offset is added to the current flowing in the power line from 1.0 ms, and the input signal (V1) increases by the amount of the offset. Following this, the output signal (V2) of integration circuit 191 also increases. By subtraction circuit 192 subtracting the output signal (V2) of integration circuit 191 from the input signal (V1), the effects of the offset (i.e., the effects of current variations during communication) can be canceled.

The waveform of the output signal (V3) of subtraction circuit 192 is a trapezoidal wave. The smoother the output signal (V2) of integration circuit 191 is, the more gradual the decrease of the slope of the upper side of the trapezoidal wave (Simulation 2). In contrast, the steeper the change in the output signal (V2) of integration circuit 191, the steeper the decrease of the slope of the upper side of the trapezoidal wave (Simulation 1).

The pulse width of the output signal (V4) with a waveform shaped by comparison circuit 193 is affected by the decrease in slope of the upper side of the trapezoidal wave that is the output signal (V3) of subtraction circuit 192. Essentially, comparison circuit 193 should output a high-level signal during the period when the pulse of the input signal (V1) is at a high level.

When the trapezoidal wave falls below the threshold voltage (0.5 V) during the trapezoidal wave output period corresponding to the period in which the pulse of the input signal (V1) is at a high level, the output signal of comparison circuit 193 is inverted to a low level.

As illustrated in FIG. 10, in Simulation 1, the pulse width of the output signal (V4) of comparison circuit 193 is unstable, and there are many sections where the pulse width of the output signal (V4) of comparison circuit 193 is smaller than the pulse width of the input signal (V1).

On the other hand, as illustrated in FIG. 13, in Simulation 2, the pulse width of the output signal (V4) of comparison circuit 193 is stable, and the pulse width of the output signal (V4) of comparison circuit 193 generally coincides with the pulse width of the input signal (V1). In Simulation 2, the slope decrease of the upper side of the trapezoidal wave, which is the output signal (V3) of subtraction circuit 192, is gradual, which is due to the fact that the trapezoidal wave never falls below the threshold voltage (0.5 V).

When the pulse width of the output signal (V4) of comparison circuit 193 is unstable, the possibility of incorrect bit determination performed by first controller 15 (microcontroller) increases. Therefore, it is desirable to set the time constant of the RC circuit to stabilize the pulse width of the output signal (V4) of comparison circuit 193. Specifically, the time constant of the RC low-pass filter is set such that cutoff frequency fc of the RC low-pass filter is equal to at most 1/10 of the clock frequency corresponding to the communication speed of the ID. When cutoff frequency fc of the RC low-pass filter is too low relative to the clock frequency, the followability of the output signal (V2) of integration circuit 191 with respect to the input signal (V1) decreases. Therefore, the time constant of the RC low-pass filter may be set such that cutoff frequency fc of the RC low-pass filter is equal to approximately 1/10 of the clock frequency corresponding to the communication speed of the ID.

The example in which first ID detection circuit 19 includes comparison circuit 193 has been described above. However, comparison circuit 193 may be omitted and the output signal (V3) of subtraction circuit 192 may be directly input to the analog input port of first controller 15 (microcontroller). The A/D converter in first controller 15 (microcontroller) converts the output signal (V3) of subtraction circuit 192 to a digital value at a predetermined sampling rate. In such a manner, the output signal (V3) of subtraction circuit 192 may be converted to a binary signal by comparison circuit 193 or by first controller 15. In either case, when the waveform of the output signal (V3) of subtraction circuit 192 is output with a pulse waveform as close as possible to the pulse waveform of the 1/2 amplitude of the pulse waveform of the input signal (V1), highly accurate bit determination can be performed.

The example, in which the ID superimposed on the current flowing in the power line is detected by hardware processing performed by first ID detection circuit 19, has been described above. In this regard, detection can also be performed by software processing by first controller 15 (microcontroller). In this case, first ID detection circuit 19 is omitted, and the input signal (V1) corresponding to the current measured by first current sensor 13 is directly input to the analog input port of first controller 15 (microcontroller).

The A/D converter in first controller 15 (microcontroller) converts the input signal (V1) to a digital value at a sampling rate faster than the clock frequency corresponding to the communication speed of the ID (for example, at the sampling rate 10 to 100 times the clock frequency). High-speed sampling is required for detailed observation of waveform transitions within a unit cycle of the input signal. The CPU in first controller 15 (microcontroller) integrates the digital input signal (V1) on which high-speed sampling has been performed, and calculates the integral signal (equivalent to the output signal (V2) of integration circuit 191). The CPU calculates a correction input signal by subtracting the calculated integral signal from the input signal sampled at the clock frequency timing. The CPU detects each bit of the ID by comparing the correction input signal with the threshold value.

The ID detection process by software processing is effective when the communication speed of the ID is low.

On the other hand, when the communication speed of the ID is high, it is necessary to use high-performance first controller 15 (microcontroller). In addition, measures against heat generation are required. It is easier to change the time constant in the ID detection process by software processing than in the ID detection process by hardware processing.

The ID superimposing circuit of the identification information transmitting device may insert a test bit string defined by a plurality of bits (e.g., 4 bits, 8 bits, or 16 bits) with alternating "1" and "0" before the ID bit string. The ID detection circuit or the controller of the identification information receiving device detects the representative value (e.g., average, median) of the amplitude of the bits in the test bit string before detecting the ID bit string. The ID detection circuit or the controller of the identification information receiving device then sets the detected representative value to the initial value of the output signal (V2) or the integral signal (hereinafter collectively referred to as integral signal) of integration circuit 191.

This allows the initial value of the integral signal to be set near the center of the input signal (V1), and prevents the integral signal from being skewed toward "1" or "0" when the ID bit string includes consecutive "1" or "0". Even when there is an idle bit string or a start bit string of consecutive "1" or "0" before the ID bit string, it is possible to prevent the initial value of the integral signal from being skewed toward "1" or "0".

As described above, in the present embodiment, it is possible to automatically cancel the current variations by subtracting the integral signal of the current signal from the current signal on which ID has been superimposed. In this case, the current variations that dynamically follow the actual current variations can be canceled.

More specifically, by extracting the DC component from the current signal with use of a low-pass filter and subtracting the DC component from the current signal, the effects of the long-term current variations based on individual differences in electronic components and aging can be eliminated. In addition, by setting cutoff frequency fc of the low-pass filter to approximately 1/10 of the clock frequency corresponding to the ID communication speed, the effects of the short-term current variations in a single packet can also be sufficiently eliminated. Therefore, stable communication can be performed even when unexpected current variations occur during current communication. As a result, it is possible to reduce incorrect determination in detecting ID from current signals.

In addition, compared to the method for switching the current threshold by switching the load resistor according to the intensity of the communication current (see PTL 1), the detection value of the current signal can be flexibly corrected and the correction range is wide. In contrast, the method according to PTL 1 does not allow fine switching of the current threshold, making it difficult to optimize the amount of correction to eliminate the effects of the current variations. In addition, the effects of short-term current variations cannot be eliminated. The ID detection method according to the present embodiment can be realized with a simple circuit or simple software, which is highly advantageous in actual use. It is not necessary to include load resistors and switches unlike the method according to PTL 1. In addition, the ID detection method according to the present embodiment is highly versatile and has a wide range of applications.

The present disclosure has been described based on the embodiment. The embodiment is an example, and a person skilled in the art would easily understand that various modified examples combining the structural elements or processing in the embodiment can be made and that such modified examples are also in the scope of the present disclosure.

In the embodiment described above, the example has been described which authenticates that battery pack 10 mounted on the mounting slot of vehicle 20 and battery pack 10 of the communication partner of vehicle 20 are identical. In this regard, the ID detection method according to the embodiment described above can also be used to authenticate that battery pack 10 mounted on the mounting slot of a charger and battery pack 10 of the communication partner of the charger are identical. In this case, the charger may serve as an identification information transmitting device and battery pack 10 may serve as an identification information receiving device, or battery pack 10 may serve as an identification information transmitting device and the charger may serve as an identification information receiving device.

In the embodiment described above, the example has been described in which battery pack 10 that includes storage battery 11 is used. In this regard, a capacitor pack that includes capacitors, including electric double layer capacitor cells, lithium ion capacitor cells, etc., may be used. In the following description, battery packs and capacitor packs are collectively referred to as electricity storage packs.

While the present disclosure is suitable for vehicle 20 that does not include its own power supply, the present disclosure does not exclude application to vehicle 20 that includes its own power supply. Therefore, vehicles 20 are not limited to electrically assisted bicycles, but also include electric motorcycles (electric scooters), electric kick scooters, electric vehicles (including low-speed electric vehicles such as golf carts and land cars), and rail vehicles. The objects to which the electricity storage packs are mounted are not limited to vehicle 20, but include, for example, electric moving bodies such as electric vessels and multicopters (drones).

The embodiment may be specified by the following items.

### [Item 1]

An identification information receiving device (10) receives identification information defined by a plurality of bits. The identification information is superimposed on a current or a voltage of a power line by an identification information transmitting device (20) that is connected to the identification information receiving device (10) via the power line. The identification information receiving device (10) includes: an integration circuit (191) that integrates an input signal that indicates a voltage value corresponding to the current or the voltage of the power line; a subtraction circuit (192) that subtracts an output signal of the integration circuit (191) from the input signal; and a binary converter (193) that determines "1" when an output signal of the subtraction circuit (192) is greater than or equal to a threshold value, and determines "0" when the output signal of the subtraction circuit (192) is less than the threshold value.

With this, it is possible to reduce incorrect determination in detecting identification information superimposed on the current or the voltage of the power line.

### [Item 2]

The identification information receiving device (10) according to Item 1, wherein the binary converter (193) includes a comparison circuit (193) that compares the output signal of the subtraction circuit (192) with the threshold value and outputs a high-level signal or a low-level signal.

With this, it is possible to stabilize the amplitude and the pulse width of a binary waveform.

### [Item 3]

The identification information receiving device (10) according to Item 1, wherein the subtraction circuit (192) includes a single power supply operational amplifier (OP2), and the input signal is input to a non-inverting input terminal of the single power supply operational amplifier (OP2), and the output signal of the integration circuit (191) is input to an inverting input terminal of the single power supply operational amplifier (OP2).

With this, it is possible to convert the negative amplitude of the input signal to 0, leading to an increased compatibility with digital signal processing performed by a microcontroller.

### [Item 4]

The identification information receiving device (10) according to Item 1, wherein the integration circuit (191) forms a low-pass filter (191), and a time constant of the low-pass filter (191) is set such that a cutoff frequency of the low-pass filter (191) is at most 1/10 of a clock frequency corresponding to a communication speed of the identification information.

With this, it is possible to sufficiently eliminate the effects of the short-term current variations.

### [Item 5]

The identification information receiving device (10) according to Item 1, wherein the integration circuit (191) includes an RC circuit (Rf, Cf) and a voltage follower (OP1).

With this, it is possible to form a low-pass filter with high accuracy at low cost.

### [Item 6]

The identification information receiving device (10) according to Item 2, wherein, when an authentication period that includes reception of the identification information ends, a power supply to an active element that is included in each of the integration circuit (191), the subtraction circuit (192), and the comparison circuit (193) is blocked.

With this, it is possible to eliminate unnecessary power consumption.

### [Item 7]

A removable and portable electricity storage pack (10) that serves as the identification information receiving device (10) according to any one of Items 1 to 6.

With this, it is possible to realize an electricity storage pack (10) that reduces incorrect determination in detecting identification information superimposed on the current or the voltage of the power line.

### [Item 8]

An identification information receiving method that is executed by an identification information receiving device (10) that receives identification information defined by a plurality of bits. The identification information is superimposed on a current or a voltage of a power line by an identification information transmitting device (20) that is connected to the identification information receiving device (10) via the power line. The identification information receiving method includes: integrating an input signal that indicates a voltage value corresponding to the current or the voltage of the power line; subtracting an integral signal of the input signal from the input signal; and determining "1" when the input signal after subtraction of the integral signal is greater than or equal to a threshold value, and determining "0" when the input signal after the subtraction is less than the threshold value.

With this, it is possible to reduce incorrect determination in detecting identification information superimposed on the current or the voltage of the power line.

### [Item 9]

An identification information receiving program that is executed by an identification information receiving device (10) that receives identification information defined by a plurality of bits. The identification information is superimposed on a current or a voltage of a power line by an identification information transmitting device (20) that is connected to the identification information receiving device (10) via the power line. The identification information receiving program causes a computer to execute: integrating an input signal that indicates a voltage value corresponding to the current or the voltage of the power line; subtracting an integral signal of the input signal from the input signal; and determining "1" when the input signal after subtraction of the integral signal is greater than or equal to a threshold value, and determining "0" when the input signal after the subtraction is less than the threshold value.

With this, it is possible to reduce incorrect determination in detecting identification information superimposed on the current or volage of the power line.

### REFERENCE MARKS IN THE DRAWINGS

- 10: battery pack
- 20: vehicle
- 11: storage battery
- 12: first relay
- 13: first current sensor
- 14: first power supply circuit
- 15: first controller
- 16: first wireless communicator
- 17: first antenna
- 18: first ID superimposing circuit
- 19: first ID detection circuit
- 21: motor
- 22: inverter
- 23: second relay
- 24: second power supply circuit
- 25: second controller
- 26: second wireless communicator
- 27: second antenna
- 28: second ID superimposing circuit
- 29: second ID detection circuit
- 210: voltage detection circuit
- T1: power supply terminal
- T2: power receiving terminal
- Lp: power line
- 191: integration circuit
- 192: subtraction circuit
- 193: comparison circuit
- Rf: filter resistor
- R1 to R4: resistor
- Cf: filter capacitor
- OP1 to OP3: Third operational amplifier
- S1 to S3: switch

## Claims

1. An identification information receiving device that receives identification information defined by a plurality of bits from an identification information transmitting device connected to the identification information receiving device via a power line, the identification information being superimposed on a current or a voltage of the power line by the identification information transmitting device, the identification information receiving device comprising:
an integration circuit that integrates an input signal that indicates a voltage value corresponding to the current or the voltage of the power line;
a subtraction circuit that subtracts an output signal of the integration circuit from the input signal; and
a binary converter that determines an output signal of the subtraction circuit as one when the output signal of the subtraction circuit is greater than or equal to a threshold value, and determines zero when the output signal of the subtraction circuit is less than the threshold value.

2. The identification information receiving device according to claim 1,
wherein the binary converter includes a comparison circuit that compares the output signal of the subtraction circuit with the threshold value and outputs a high-level signal or a low-level signal depending on a result of the comparing.

3. The identification information receiving device according to claim 1,
wherein the subtraction circuit includes an operational amplifier including a single power supply, and
the input signal is input to a non-inverting input terminal of the operational amplifier, and the output signal of the integration circuit is input to an inverting input terminal of the operational amplifier.

4. The identification information receiving device according to claim 1,
wherein the integration circuit includes a low-pass filter, and
a time constant of the low-pass filter includes a cutoff frequency is at most 1/10 of a clock frequency corresponding to a communication speed of the identification information.

5. The identification information receiving device according to claim 1,
wherein the integration circuit includes a RC circuit and a voltage follower.

6. The identification information receiving device according to claim 2,
wherein, when an authentication period that includes reception of the identification information ends, a power supply to an active element that is included in each of the integration circuit, the subtraction circuit, and the comparison circuit is blocked.

7. A removable and portable electricity storage pack that serves as the identification information receiving device according to any one of claims 1 to 6.

8. An identification information receiving method that is performed by an identification information receiving device that receives identification information defined by a plurality of bits, the identification information being superimposed on a current or a voltage of a power line by an identification information transmitting device that is connected to the identification information receiving device via the power line, the identification information receiving method comprising:
integrating an input signal that indicates a voltage value corresponding to the current or the voltage of the power line;
subtracting an integral signal of the input signal from the input signal; and
determining the input signal after subtraction of the integral signal as one when the input signal after subtraction of the integral signal is greater than or equal to a threshold value, and determining the input signal after subtraction of the integral signal as zero when the input signal after the subtraction is less than the threshold value.

9. An identification information receiving program that is executed by an identification information receiving device that receives identification information defined by a plurality of bits, the identification information being superimposed on a current or a voltage of a power line by an identification information transmitting device that is connected to the identification information receiving device via the power line, the identification information receiving program causing a computer to execute:
integrating an input signal that indicates a voltage value corresponding to the current or the voltage of the power line;
subtracting an integral signal of the input signal from the input signal; and
determining the input signal after subtraction of the integral signal as one when the input signal after subtraction of the integral signal is greater than or equal to a threshold value, and determining the input signal after subtraction of the integral signal as zero when the input signal after the subtraction is less than the threshold value.

10. A non-transitory recording medium on which an information identification receiving program is recorded, the identification information receiving program that is executed by an identification information receiving device that receives identification information defined by a plurality of bits, the identification information being superimposed on a current or a voltage of a power line by an identification information transmitting device that is connected to the identification information receiving device via the power line, the identification information receiving program causing a computer to execute:
integrating an input signal that indicates a voltage value corresponding to the current or the voltage of the power line;
subtracting an integral signal of the input signal from the input signal; and
determining the input signal after subtraction of the integral signal as one when the input signal after subtraction of the integral signal is greater than or equal to a threshold value, and determining the input signal after subtraction of the integral signal as zero when the input signal after the subtraction is less than the threshold value.
